# EUROPÄISCHE PATENTSCHRIFT

(11) **EP 0 359 091 B1**
(45) Veröffentlichungstag und Bekanntmachung des Hinweises auf die Patenterteilung: **10.03.1993**
(21) Anmeldenummer: 89116338.8
(22) Anmeldetag: 05.09.1989
(51) Int. Cl.: B60R 22/32

(54) **Sicherheitsgurt mit integriertem Schlossöffner**
Seat belt with integrated buckle-releasing means
Ceinture de sécurité comportant un dispositif pour déboucler intégré

(30) Priorität: 13.09.1988 DE 3831145
(43) Veröffentlichungstag der Anmeldung: 21.03.1990
(73) Patentinhaber: Dynamit Nobel Aktiengesellschaft, 53839 Troisdorf (DE)
(72) Erfinder: Bender, Richard, Dr., D-8560 Lauf (DE); Bretfeld, Anton, D-8510 Fürth (DE)

(56) Entgegenhaltungen:
- DE-A- 3 341 568
- DE-A- 3 415 359
- DE-A- 3 436 377
- FR-A- 2 400 337

## Beschreibung

Die Erfindung richtet sich auf eine Sicherheitsgurteinrichtung an einem Fahrzeug entsprechend dem Oberbegriff des Anspruchs 1.

Die Verwendung einer pyrotechnischen Einrichtung zum selbsttätigen Lösen eines Gurtsystems ist aus der US-A-4 086 685 bekannt.

Spezielle Ausbildungen für ein Sicherheitsgurtsystem für Fahrzeuge sind der FR-A-2 507 864 und der FR-A-2 442 163 zu entnehmen.

Bei allen diesen Einrichtungen sind Umbauten am Schloß erforderlich; durch die zusätzlich eingebauten Elemente sind auch meist die äußeren Abmessungen und die Bedienbarkeit verändert; der Krafaufwand sowie der Platzbedarf sind erheblich.

Aufgabe der Erfindung ist es, handelsübliche Gurtsysteme in Fahrzeugen ohne aufwendige Veränderungen am Schloß mit einem preiswerten, sicheren Gurtschloßöffner zu versehen.

Die Aufgabe wird bei einer Sicherheitsgurteinrichtung der eingangs genannten Art gelöst durch die im Kennzeichen des Anspruchs 1 angegebenen Maßnahmen.

Mit dieser Einrichtung wird erreicht, daß nach einer einstellbaren Zeit in der Größenordnung von 10 s nach einem Ereignis, bei dem ein Sensor einen über einer Schwelle liegenden Wert abgibt, automatisch die Auslösetaste betätigt wird, und sich somit das Gurtschloß öffnet. Das tritt selbst dann noch ein, wenn Teile des Schlosses schon verbogen sein sollten, weil mit einem pyrotechnischen Kraftelement Kräfte erzeugbar sind, die größer sind als ein Daumendruck, und Sicherheitsgurtschlösser so konstruiert sind, daß sie aufgehen, sobald die formschlüssige Verriegelung aufgehoben ist.

Man kann eine elektronische Verzögerung zwischen Sensor und Anzündelement des pyrotechnischen Kraftelementes vorsehen oder in das pyrotechnische Kraftelement eine pyrotechnische Verzögerungsstrecke zwischen Anzündsatz und Treibladungssatz des pyrotechnischen Kraftelementes einbauen. Je nachdem wie das Verbindungsstück zwischen dem Stift des pyrotechnischen Kraftelementes und der Auslösetaste ausgebildet ist, kann man einziehende oder ausstoßende Kraftelemente einsetzen. Es muß nur sichergestellt sein, daß bei Initiieren des pyrotechnischen Kraftelementes die Auslösetaste niedergedrückt wird, beim Niederdrücken der Auslösetaste von Hand aber der Stift des pyrotechnischen Kraftelementes nicht bewegt wird.

Die Erfindung ist in der Zeichnung dargestellt und weiter beispielhaft beschrieben. Es zeigen:
Fig. 1 Seitenansicht eines Gurtschlosses mit einem starren Verbindungsstück zwischen Auslösetaste und pyrotechnischem Kraftelement;
Fig. 2 Draufsicht auf ein Gurtschloß gemäß Fig. 1 ohne Gehäuse;
Fig. 3 Seitenansicht eines Gurtschlosses mit einem Seil zwischen Auslösetaste und pyrotechnischem Kraftelement ohne Gehäuse;
Fig. 4. Draufsicht auf ein Gurtschloß nach Fig. 3;
Fig. 5 Draufsicht auf ein Gurtschloß, bei dem die Bewegungsrichtung zum Betätigen der Auslösetaste senkrecht zur Gurtlasche erfolgt;
Fig. 6 Seitenansicht eines Gurtschlosses nach Fig. 5 ohne Gehäuse.

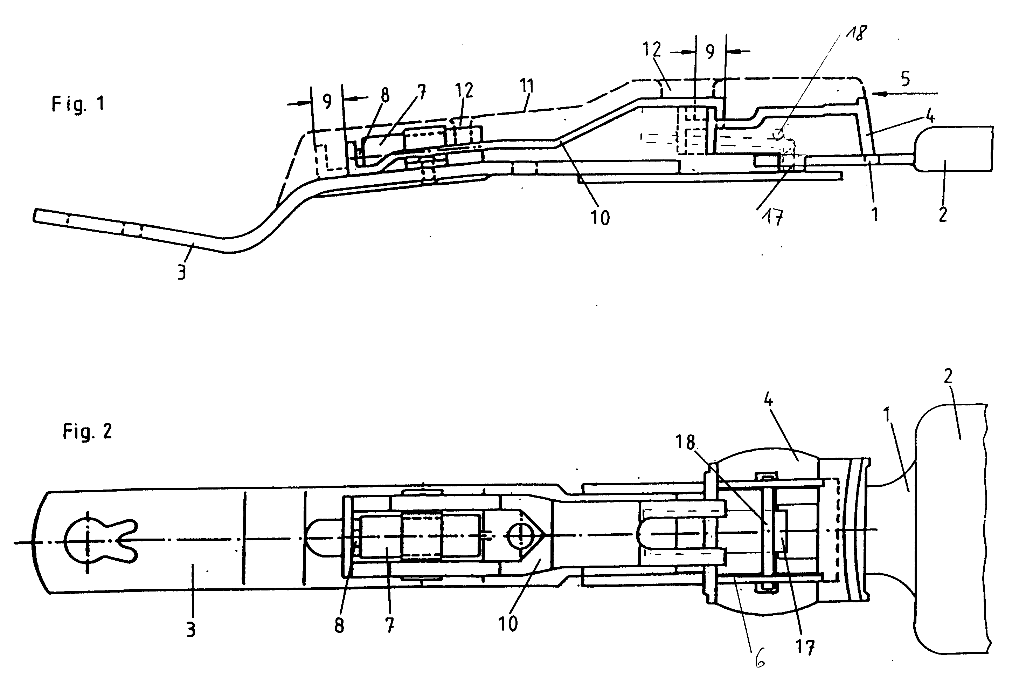

Die drei verschiedenen Ausführungsformen sollen beispielhaft zeigen, daß der erfinderische Gedanke in verschiedener Weise umgesetzt und an unterschiedliche Schloßtypen angepaßt werden kann. Bei dem heute gebräuchlichsten Gurtschloß gemäß Figur 1 und 2 stimmt die Bewegungsrichtung 5 zum Betätigen der Gurtauslösetaste 4 damit überein, wie die Lasche 1, die über eine Schlaufe 2 an einem Teil des Gurtes hängt, zum Anlegen des Gurtes an das am Ende einer Gurtpeitsche 3 hängende Gurtschloß gesteckt werden muß. Ein solches Schloß enthält einen Arretierstift 17, der im verriegelten Zustand eine formschlüssige Verbindung zwischen Lasche 1 und Gurtpeitsche 3 herstellt. Beim Drücken der Auslösetaste 4 wird der Bolzen 18 innerhalb einer nicht gezeigten Aussparung an der Wand 6 des Schlosses so bewegt, daß der Arretierstift 17 durch eine Feder unterstützt zum Bolzen hin ausweichen kann und ein ebenfalls nicht dargestellter, beweglicher Bügel umschnappt, was ein Herausspringen der Lasche 1 aus dem Schloß zur Folge hat.

Ein pyrotechnisches Kraftelement 7, bei dem nach Initiieren der druckgaserzeugenden Ladung ein Stift 8 um eine Strecke 9 ausgestoßen wird, ist an der Gurtpeitsche 3 auf der gegenüberliegenden Seite des Schlosses befestigt, in die die Lasche 1 gesteckt wird. In dieser Ausführung ist das Verbindungsstück 10 zwischen pyrotechnischem Kraftelement 7 und Auslösetaste 4 starr. Eine Besonderheit gemäß der Erfindung ist die krallenartige Verbindung des Verbindungsstückes 10 mit der Auslösetaste 4. Dadurch ist sichergestellt, daß beim alltäglichen Gebrauch des Gurtes das Verbindungsstück nicht bewegt wird, wenn jedoch das pyrotechnische Kraftelement 7 anspricht, wird in jedem Fall die Auslösetaste 4 um die volle Strecke 9 eingezogen, was die oben beschriebene Gurttrennung zur Folge hat.

Das Schloß ist durch ein Gehäuse 11 abgedeckt. Man erkennt unmittelbar, daß sich das Äußere des Schloßes wenig oder gar nicht verändert hat. Ein Kraftfahrer wird nicht merken, ob er einen üblichen Sicherheitsgurt anlegt oder ob das System einen erfindungsgemäßen Gurtschloßöffner enthält. Das Verbindungsstück 10 wird durch Leisten 12 am Gehäuse 11 geführt. In diesem Beispiel muß die Weglänge 9 des Stiftes 8 der Tastentiefe der Auslösetaste 4 (etwa 7 bis 9 mm) entsprechen.

Unabhängig von der Lage der Auslösetaste 4 hat ein Ereignis, das ein (in der Figur nicht gezeigter) Sensor (beispielsweise ein Beschleunigungssensor, wie er in der DE-A-2 207 831 beschrieben ist) über einer Schwelle liegend registriert, zur Folge, daß der Stift 8 des pyrotechnischen Kraftelementes 7 ganz ausgefahren wird und auch bleibt. Ein Wiederzuschnappen des Schlosses ist so nicht mehr möglich. Eine besondere Einrichtung zur Arretierung des Stiftes des pyrotechnischen Kraftelementes in seiner Endstellung nach Initiierung des pyrotechnischen Kraftelementes ist in der Regel nicht erforderlich, da bei den allermeisten pyrotechnischen Kraftelementen bauartbedingt (beschrieben beispielsweise in der DE-C-1 646 335) durch Rändelung und/oder Schlacke und/oder Restgasdruck der Stift nach einer Initiierung ein zweites Mal nicht mehr beweglich ist. Bei einer elektronischen Verzögerungseinrichtung zwischen Sensor und Anzündelement hat die Initiierung des pyrotechnischen Kraftelementes unmittelbar das Ausstoßen des Stiftes 8 zur Folge. Wenn die Verzögerungseinrichtung als pyrotechnische Verzögerungsstrecke im pyrotechnischen Kraftlelement integriert ist, wird keine gesonderte Stromquelle benötigt, und es liegt ein preiswertes, kompaktes und für die erforderlichen Zeiten recht genaues Element vor.

Figur 2 zeigt die Draufsicht auf ein Schloß nach Figur 1.

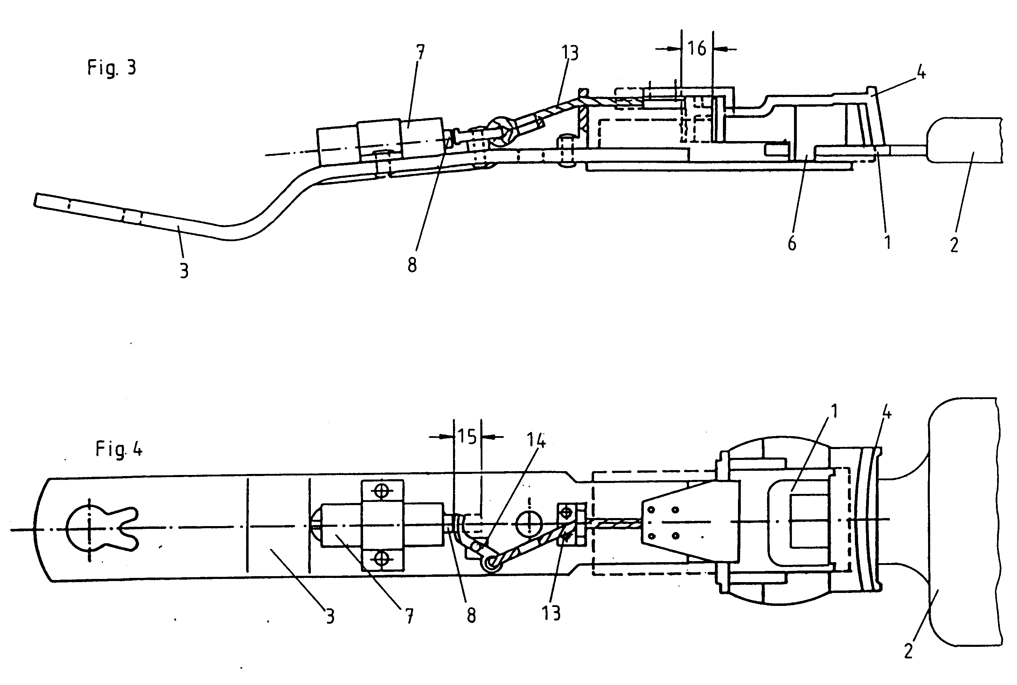

In den Figuren 3 und 4 ist ein ähnliches Gurtschloß wie in den Figuren 1 und 2 dargestellt. Der Unterschied liegt in der Übertragung der Bewegung vom pyrotechnischen Kraftelement auf die Auslösetaste. Gleichwirkende Teile tragen die gleichen Bezugszeichen. Das Verbindungsstück, das in den Figuren 1 und 2 als starr ausgebildet ist, ist hier ein Seil 13. Bei Initiierung des pyrotechnischen Kraftelementes 7 wird hier der Stift 8 aus dem pyrotechnischen Kraftelement zur Lasche 1 hin um eine Strecke 15 ausgestoßen. Aufgrund eines Hebels 14 wird diese Bewegung umgesetzt in eine Zugbewegung des Seiles 13, wobei die Bewegung 15 des Kolbens 8 und die Hebelgröße auf die erforderliche Bewegung 16 der Auslösetaste 4 abgestimmt ist. Die erforderliche Abdeckung ist in den Figuren weggelassen.

Das Seil 13 ist mit der Auslösetaste 4 fest verbunden. Wegen der Nachgiebigkeit des Seiles 13 werden beim Niederdrücken der Auslösetaste 4 keine Kräfte auf den Stift 8 des pyrotechnischen Kraftelementes 7 übertragen, wohingegen bei Initiieren des pyrotechnischen Kraftelementes 7 die Auslöstetaste 4 ganz eingedrückt wird und - bleibt.

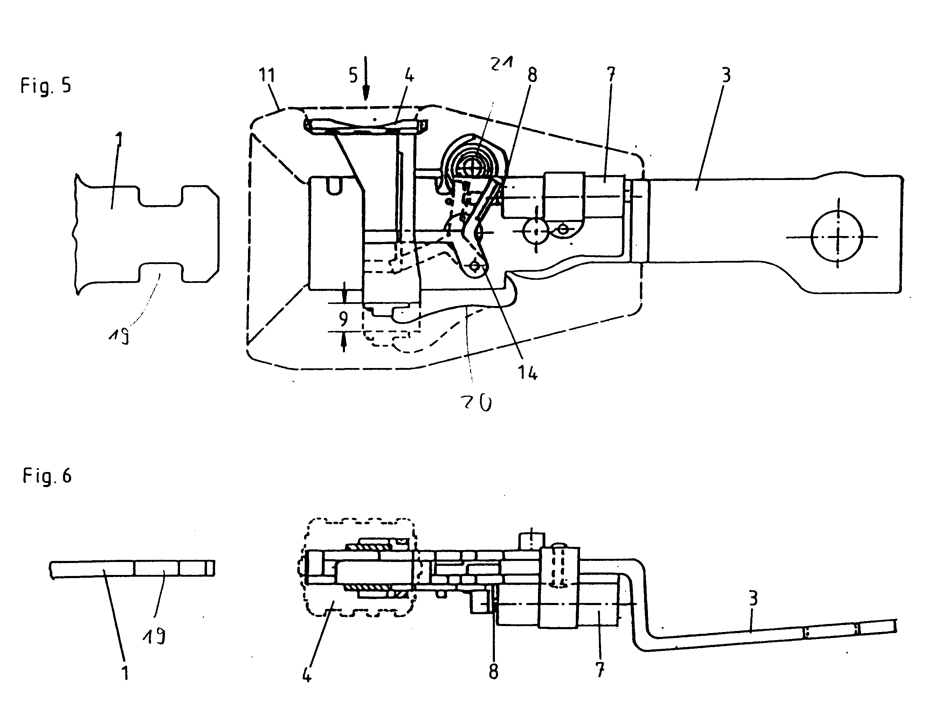

In den Figuren 5 und 6 ist eine andere an sich bekannte Art eines Sicherheitsgurtschlosses dargestellt, bei dem die Auslösetaste 4 senkrecht zur Spannrichtung des Gurtes betätigbar ist. Anstelle des in eine zentrale Öffnung in der Lasche 1 eingreifenden Arretierstiftes 17 greift hier im verriegelten Zustand ein nicht gezeigtes Walzenpaar seitlich an einer entsprechenden Ausnehmung 19 an der Lasche 1 an. Das Walzenpaar wird durch das eine Ende 20 der Spiralfeder 21 gegen die Lasche 1 gedrückt. Das andere Ende der Spiralfeder wirkt mit einem (nicht eingezeichneten) Auswerfer zusammen, der die Lasche 1 aus dem Schloß hinausdrückt, sobald die formschlüssige Verbindung durch Drücken der Auslösetaste 4 in Richtung 5 aufgehoben ist. Die Übertragung der Bewegung des Stiftes 8 auf die Auslösetaste 4 erfolgt hier auch über einen Hebel 14, wobei die Verbindung des Stiftes 8 mit dem Hebel 14 derart ist, daß bei Betätigen der Auslösetaste der Hebel 14 gedreht wird, ohne daß sich der Stift 8 bewegt, wohingegen beim Ausstoßen des Stiftes 8 aus dem pyrotechnischen Kraftelement 7 die Taste 4 immer bis zu einem (nicht gezeigten) Anschlag gedrückt wird und bleibt. Diese Endstellung ist für den Hebel 14 sowie das Ende 20 der Spiralfeder 21 und den unteren Bereich der Auslösetaste 4 in Figur 5 gestrichelt eingezeichnet.

## Patentansprüche

1. Sicherheitsgurteinrichtung an einem Fahrzeug, mit einem am Fahrzeug über eine Gurtpeitsche befestigbaren Schloß zur Aufnahme eines mit einer Lasche (1) versehenen Gurtes, wobei durch Drücken einer Auslösetaste (4) am Schloß eine formschlüssige Verbindung der Lasche (1) mit dem Schloß aufgehoben wird, in Verbindung mit einem Gurtschloßöffner mit einem Sensor, einer Verzögerungseinrichtung und einem pyrotechnischen Kraftelement (7) mit einem elektrischen Anzünder und einem axial beweglichen Stift (8), **dadurch gekennzeichnet**, daß das Kraftelement (7) an der Gurtpeitsche (3) auf der von der die Lasche (1) aufnehmenden Seite des Schlosses abgewandten Seite befestigt ist, und dessen Stift (8) über ein Verbindungsstück (10, 13, 14) mit der Auslösetaste (4) verbunden ist, wobei einerseits das Verbindungsstück (10, 13, 14) nach Initiierung des Kraftelementes (7) unter der axialen Bewegung des Stifes (8) eine Zugkraft auf die Auslösetaste (4) ausübt, so daß diese entsprechend der normalen Betätigung von Hand einziehbar ist und die Lasche (1) freigibt, und andererseits die Auslösetaste (4) weiterhin normal von Hand betätigbar ist.

2. Sicherheitsgurteinrichtung an einem Fahrzeug nach Anspruch 1, dadurch gekennzeichnet, daß die Verzögerung elektronisch erfolgt.

3. Sicherheitsgurteinrichtung an einem Fahrzeug nach Anspruch 1, dadurch gekennzeichnet, daß die Verzögerung pyrotechnisch erfolgt.

4. Sicherheitsgurteinrichtung an einem Fahrzeug nach einem der Ansprüche 1 bis 3, dadurch gekennzeichnet, daß bauartbedingt der Stift (8) des pyrotechnischen Kraftelementes (7) nach Initiierung in seiner Endposition verbleibt.

## Claims

1. Safety belt apparatus on a vehicle and having a clasp securable to the vehicle via a freeing section of the belt and for the receipt of a belt provided with a clip (1), with, a form closing connection of the clip (1) with the clasp being terminated by pressing of a release button (4) to the clasp, which apparatus is combined with a belt clasp opener with a sensor, a delay arrangement and a pyrotechnic force element (7) with an electrical igniter and a pin (8) which is axially displaceable, characterised in that the force element (7) is secured to the freeing section (3) of the belt on the side facing away from the side of the lock which receives the clip (1) and whose pin (8) is connected by way of a connection piece (10, 13, 14) with the release button (4), with on the one hand the connecting piece (10, 13, 14) exerting a pulling force on the release button (4) when subject to the axial displacement of the pin (8) after initiating of the force element (7) so that this release button can be retracted corresponding to the normal hand operation and release the clip (1), and on the other hand, the release button (4) is furthermore capable of operation by hand normally.

2. Safety belt arrangement on a vehicle according to Claim 1, characterised in that the delay takes place electronically.

3. Safety belt arrangement on a vehicle according to Claim 1, characterised in that the delay takes place pyrotechnically.

4. Safety belt arrangement on a vehicle according to one of Claims 1 to 3, characterised by a construction such that the pin (8) of the pyrotechnic force element (7) remains in its end position after initiation.

## Revendications

1. Système de ceinture de sécurité de véhicule comportant un mécanisme de verrouillage qui est fixé sur le véhicule par l'intermédiaire d'une partie de fixation et reçoit une ceinture pourvue d'une attache (1), une liaison par obstacle entre l'attache (1) et le mécanisme de verrouillage pouvant être libérée par pression sur un bouton de déverrouillage (4) du mécanisme de verrouillage, en liaison avec un dispositif d'ouverture du mécanisme de verrouillage de la ceinture de sécurité qui comporte un capteur, un dispositif de temporisation et un élément d'actionnement (7) pyrotechnique avec un dispositif d'allumage électrique et un doigt (8) mobile axialement, caractérisé par le fait que l'élément d'actionnement (7) est monté sur la partie de fixation (3), du côté du dispositif de verrouillage opposé à celui qui reçoit l'attache (1) et que son doigt (8) est relié au bouton de déverrouillage (4) par l'intermédiaire d'un élément de liaison (10, 13, 14), d'une part l'élément de liaison ( 10, 13, 14) exerçant, après déclenchement de l'élément d'actionnement (7), par le déplacement axial du doigt (8), une traction sur le bouton de déverrouillage (4) de manière telle que celui-ci se rentre et libère l'attache (1) de la même manière lors d'un actionnement manuel et, d'autre part, le bouton de déverrouillage (4) restant actionnable manuellement.

2. Système de ceinture de sécurité de véhicule selon la revendication 1, caractérisé par le fait que la temporisation est obtenue par des moyens électroniques.

3. Système de ceinture de sécurité de véhicule selon la revendication 1, caractérisé par le fait que la temporisation est obtenue par des moyens pyrotechniques.

4. Système de ceinture de sécurité de véhicule selon l'une des revendications 1 à 3, caractérisé par le fait que, après déclenchement, le doigt (8) de l'élément d'actionnement (7) pyrotechnique est maintenu dans sa position terminale par des dispositions constructives.
